# FASCICULE DE BREVET EUROPEEN

(11) **EP 3 874 008 B1**
(45) Date de publication et mention de la délivrance du brevet: **22.11.2023**
(21) Numéro de dépôt: 19813386.0
(22) Date de dépôt: 28.10.2019
(51) Int. Cl.: C09K 8/524, C08L 39/04

(54) **COMPOSITION PERMETTANT DE RETARDER LA FORMATION D'HYDRATES DE GAZ**
ZUSAMMENSETZUNG ZUR VERWENDUNG FÜR DIE VERZÖGERUNG DER BILDUNG VON GASHYDRATEN
COMPOSITION THAT CAN BE USED TO DELAY THE FORMATION OF GAS HYDRATES

(30) Priorité: 31.10.2018 FR 1860083
(43) Date de publication de la demande: 08.09.2021
(73) Titulaire: ARKEMA FRANCE, 92700 Colombes (FR)
(72) Inventeur: BARRETO, Gilles, 69510 MESSIMY (FR); DELROISSE, Henry, 69003 LYON (FR)
(74) Mandataire: Arkema Patent
(86) Numéro de dépôt international: PCT/FR2019/052562
(87) Numéro de publication internationale: WO 2020/089554

(56) Documents cités:
- WO-A1-2006/110192
- WO-A1-2010/117660
- WO-A1-2016/202577
- CN-A- 106 190 060

## Description

La présente invention concerne le domaine de l'extraction d'hydrocarbures et plus particulièrement le domaine des additifs utilisés pour faciliter l'extraction et le transport desdits hydrocarbures vers la surface. La présente invention concerne tout particulièrement un procédé pour inhiber la formation d'hydrates de gaz qui sont couramment connus pour perturber l'écoulement des hydrocarbures dans les conduites d'extraction et de transport desdits hydrocarbures.

L'extraction d'hydrocarbures, principalement pétrole, gaz, condensats et autres, est aujourd'hui réalisée dans des environnements très divers, et notamment dans des sites offshores, sous-marins, ou encore dans des sites connaissant des périodes météorologiques froides. Ces divers environnements peuvent souvent conduire à un refroidissement important des fluides extraits au contact des parois froides des conduites de transport.

On entend par fluides extraits (ou fluides produits, ou fluides de production), les fluides comprenant le pétrole, les gaz, les condensats, l'eau et leurs mélanges. Par pétrole, on entend au sens de la présente invention du pétrole brut, c'est-à-dire non raffiné, provenant d'un gisement.

Par gaz, on entend au sens de la présente invention des gaz naturels bruts, c'est-à-dire non traités, directement extraits d'un gisement, tels que par exemple des hydrocarbures, comme du méthane, de l'éthane, du propane, du butane, du sulfure d'hydrogène, du dioxyde de carbone et d'autres composés gazeux dans les conditions d'exploitation, ainsi que leurs mélanges. La composition du gaz naturel extrait varie considérablement selon les puits. Ainsi, le gaz peut comprendre des hydrocarbures gazeux, de l'eau et d'autres gaz.

Par condensats, on entend au sens de la présente invention des hydrocarbures de densité intermédiaire. Les condensats comprennent généralement des mélanges d'hydrocarbures qui sont liquides dans les conditions d'exploitation.

Il est connu que ces fluides de production comportent le plus souvent une phase aqueuse, en quantité plus ou moins importante. L'origine de cette phase aqueuse peut être endogène et/ou exogène au réservoir souterrain contenant les hydrocarbures, la phase aqueuse exogène provenant généralement d'une injection d'eau, dite encore eau d'injection.

L'épuisement des sites anciennement découverts conduit souvent aujourd'hui l'industrie pétrolière et gazière à extraire, notamment sur de nouveaux sites, depuis des profondeurs de plus en plus importantes, sur des sites offshores et avec des conditions météorologiques toujours plus extrêmes.

En particulier sur les sites offshores, les conduites de transport des fluides produits sont souvent disposées sur les fonds marins, à des profondeurs de plus en plus importantes, où la température de l'eau de mer est souvent inférieure à 15°C, plus souvent inférieure à 10°C, voire proche de ou égale à 4°C.

De manière similaire, il n'est pas rare de trouver des sites d'extraction situés dans des zones géographiques où l'air et/ou l'eau de surface peuvent être à des températures relativement froides, typiquement en dessous de 15°C, voire en-dessous de 10°C. Or, à de telles températures, les fluides produits subissent un refroidissement important lors de leur transport. Ce refroidissement peut être encore amplifié dans le cas d'un arrêt ou d'un ralentissement de production, cas dans lesquels le temps de contact entre les fluides produits et les parois froides de la conduite peut augmenter, souvent considérablement.

Un des inconvénients directement lié à un abaissement plus ou moins brutal des températures des fluides produits, est la formation de clathrates, également appelés cristaux d'hydrates, hydrates de gaz ou plus simplement hydrates. Le risque de formation de tels hydrates dans les fluides de production, et notamment lors de l'extraction pétrolière, gazière et de condensats, est d'autant plus grand que la température des fluides de production est basse et que la pression de ces fluides est élevée.

Ces clathrates sont des cristaux solides (semblables à ceux de l'eau sous forme de glace) formés par des molécules d'eau, également nommées « receveur », autour d'une ou plusieurs molécules de gaz, également nommées « invitées », tel que le méthane, l'éthane, le propane, le butane, le gaz carbonique ou l'hydrogène sulfuré.

La formation et la croissance de ces cristaux sont le plus souvent induites par un abaissement de la température des fluides de production qui sortent chauds des réservoirs géologiques qui les contiennent et qui entrent dans une zone froide. Ces cristaux peuvent croître plus ou moins rapidement et s'agglomérer et peuvent provoquer colmatages ou bouchages des conduites de production, des conduites de transport des hydrocarbures (pétrole, condensats, gaz), des vannes, clapets et autres éléments susceptibles d'être bouchés totalement ou au moins partiellement.

Ces colmatages/bouchages peuvent conduire à des pertes de production de pétrole, de condensats et/ou de gaz, entraînant des pertes économiques non négligeables, voire très importantes. En effet, ces colmatages et/ou bouchages auront pour conséquence une diminution du débit de production, voire un arrêt de l'unité de production. En cas, de bouchage la recherche de la zone du bouchon et son élimination auront pour conséquence une perte de temps et de profit pour cette unité. Ces colmatages et/ou bouchages peuvent également entraîner des dysfonctionnements sur des éléments de sécurité (vannes de sécurité par exemple).

Ces problèmes de formation et/ou d'agglomération d'hydrates peuvent également être rencontrés au sein des boues de forage ou au sein des fluides de complétion, lors d'une opération de forage ou d'une opération de complétion.

Pour diminuer, retarder ou inhiber la formation et/ou l'agglomération d'hydrates, diverses solutions ont déjà été proposées ou envisagées. Parmi celles-ci, on peut notamment citer une première solution qui consiste à déshydrater le fluide de production, pétrole brut ou gaz, en amont de la zone de la conduite où la température favorise la formation desdits hydrates. Cette solution est cependant difficile, voire impossible, à mettre en oeuvre dans des conditions économiques satisfaisantes.

Une seconde approche, également très onéreuse, consiste à maintenir la température de la conduite à une température supérieure à la température de formation et/ou d'agglomération des hydrates, à une pression donnée.

Une troisième approche, fréquemment utilisée, consiste à ajouter un additif dénommé « anti-hydrate thermodynamique » (ou « thermodynamic hydrate inhibitor » ou encore « THI » en langue anglaise), généralement un alcool ou dérivé d'alcool, par exemple du méthanol, ou du glycol, dans les fluides produits contenant le mélange eau/gaz invité(s). Il est aujourd'hui couramment reconnu que l'ajout d'un tel additif permet de déplacer la température d'équilibre thermodynamique de formation des hydrates. Afin d'obtenir une efficacité acceptable, environ 30% en poids d'alcool, par rapport à la quantité d'eau, sont généralement introduits. Cependant, la toxicité des alcools ou dérivés d'alcools et la grande quantité d'additif utilisé conduisent de plus en plus les industriels à adopter une quatrième approche.

Cette quatrième solution consiste à ajouter un additif à faible dosage, appelé LDHI (« Low Dosage Hydrate inhibitor » en langue anglaise) dans les fluides produits comprenant le mélange eau/gaz invité(s). Cet additif est également appelé anti-hydrate et est introduit à un faible dosage, généralement compris entre 1% et 4% en poids, par rapport au poids de l'eau, étant entendu que des quantités supérieures ou inférieures sont bien entendu possibles. Deux types d'additifs anti-hydrates sont actuellement connus, les anti-agglomérants et les anti-hydrates cinétiques.

Comme indiqué précédemment, la formation d'hydrates dépend principalement de la température et de la pression, ainsi que de la composition du ou des gaz invité(s). Pour pouvoir comparer la performance des additifs, on utilise la notion de « sous-refroidissement » ou encore « sub-cooling » (SC) en langue anglaise. On définit ainsi le sub-cooling par la différence entre la température d'équilibre thermodynamique de formation des cristaux d'hydrates (T_{éq}), pour une pression et une composition des gaz formateurs d'hydrates et de la phase aqueuse données, et la température des fluides produits (ou température d'exploitation T), selon l'équation suivante : SC = T_{éq} - T.

Lorsque le sub-cooling est supérieur ou égal à 0°C, il y a risque de formation d'hydrate de gaz et ce risque est d'autant plus important que le sub-cooling est grand.

Les anti-agglomérants ne sont pas des inhibiteurs de la formation des cristaux d'hydrates, mais possèdent la propriété de les disperser, ce qui par conséquent empêche lesdits cristaux d'hydrates de s'agglomérer entre eux. Les cristaux d'hydrates ainsi dispersés ne peuvent plus colmater les canalisations de transport des fluides de production pétrolière et gazière, augmentant ainsi la production, en particulier l'extraction de pétrole et de gaz.

Les anti-agglomérants conservent leur efficacité même à faible température. Ils permettent notamment d'éviter les problèmes de bouchage des conduits à des températures généralement de 15°C en dessous de latempérature minimale à laquelle se forment les cristaux d'hydrates, pour une pression donnée.

Les anti-hydrates cinétiques, quant à eux, agissent sur la germination et la croissance des cristaux d'hydrates, en retardant de plusieurs heures, voire de plusieurs jours la formation des cristaux. Cependant, contrairement aux anti-agglomérants, les anti-hydrates cinétiques fonctionnent difficilement à forts sub-coolings. En effet, à des températures de plus de 10°C inférieures à la température minimale à laquelle se forment les cristaux d'hydrates pour une pression donnée (SC ≥ 10°C), l'efficacité des anti-hydrates cinétiques est réduite.

En d'autres termes, à ces niveaux de sub-cooling, le temps d'apparition des cristaux est suffisamment court pour qu'ils apparaissent, augmentant ainsi la perte de charge dans les conduites de transport des fluides de production pétrolière et gazière.

Le document CN104357034 divulgue un mélange de deux homo-polymères (poly(vinylpyrrolidone) et poly(vinylcaprolactame)) associé à du propylène glycol. Ce mélange présente des propriétés d'anti-hydrate cinétique. On observe cependant un moussage relativement important de ce mélange dans les conditions d'utilisation. En outre, les polymères de ce mélange conduisent à un point de trouble à une température relativement peu élevée qui peut notamment s'avérer insuffisante lors d'injections à chaud. WO 2010/117660 A1 et CN 106 190 060 A divulguent aussi des compositions utilisées comme inhibiteur de formation d'hydrates de gaz dans les exploitations d'extraction pétrolières.

Il subsiste par conséquent un réel besoin de développer des additifs permettant de retarder la formation d'hydrates (anti-hydrates cinétiques) encore plus efficaces et notamment qui permettent de travailler à des sub-coolings supérieurs à 10°C, mieux encore supérieurs à 12°C, plus avantageusement supérieurs à 13°C, de préférence encore supérieurs à 15°C. En d'autres termes, il reste un réel besoin pour des anti-hydrates cinétiques qui présentent des temps d'induction (temps de formation des hydrates) les plus longs possibles.

Un autre objectif de la présente invention consiste à proposer un inhibiteur d'hydrates cinétique efficace dans les conditions d'utilisation usuelles, c'est-à-dire pour un dosage typiquement compris entre 0,1% et 10% en poids, par rapport au poids total de la phase aqueuse dans un fluide de production. Un autre objectif encore est de proposer un inhibiteur d'hydrates cinétique peu toxique pour l'environnement, mais aussi peu coûteux et facile à produire.

Un autre objectif de l'invention est de proposer un inhibiteur d'hydrate cinétique avec un point de trouble plus élevé que ceux connus de l'art antérieur. Un autre objectif encore est de proposer un anti-hydrate cinétique ne provoquant qu'un moussage faible ou au moins substantiellement réduit par rapport à celui observé avec les anti-hydrates de l'art antérieur.

Il a maintenant été découvert de manière surprenante que des compositions comprenant des mélanges de polymères spécifiques permettent de satisfaire en totalité ou au moins en partie les objectifs précités et en particulier permettent de se comporter comme des anti-hydrates cinétiques présentant des temps d'induction relativement longs, et en particulier plus longs que ceux observés avec les anti-hydrates cinétiques connus de l'art antérieur, et ceci pour des sub-coolings relativement importants. Ces compostions de polymères se montrent en outre respectueuses de l'environnement et faciles à préparer avec des coûts de production tout à fait raisonnables.

D'autres objectifs, caractéristiques, aspects et avantages de l'invention apparaîtront encore plus clairement à la lecture de la description et des exemples qui suivent. Dans ce qui va suivre, et sauf indication contraire, les bornes d'un domaine de valeurs sont comprises dans ce domaine, notamment dans les expressions « compris entre... et ... » et « allant de ... à ... ».

Ainsi, et selon un premier aspect, la présente invention, telle que définie dans les revendications, concerne une composition comprenant :
a) au moins un co-polymère dont au moins un des motifs répétitifs comprend au moins une fonction amide,
b) au moins un polyéther de poids moléculaire en poids (M_{w}) supérieur à 60 g.mol⁻¹, de préférence supérieur à 100 g.mol⁻¹, et
c) éventuellement, mais préférentiellement, au moins un solvant organique, composition dans laquelle le co-polymère dont au moins un des motifs répétitifs comprend au moins une fonction amide est un co-polymère dont les fonctions amide sont branchées sur la chaîne polymère (fonctions amide dites « pendantes »). Les atomes d'azote desdites fonctions amides peuvent être substitués, et sont de préférence substitués, de préférence encore mono-substitués, plus préférentiellement di-substitués. Les substituants sont identiques ou différents et sont, indépendamment les uns des autres, choisis parmi l'atome d'hydrogène et des groupes aliphatiques comprenant de 1 à 30 atomes de carbone, préférentiellement de 1 à 8 atomes de carbone, de préférence encore de 1 à 4 atomes de carbone, et comportent éventuellement 1, 2, 3 ou 4, de préférence 1 ou 2 hétéroatomes, indépendamment choisis parmi oxygène, azote et soufre.

Les substituants des fonctions amides di-substitués peuvent également, et selon un autre mode de réalisation de la présente invention, former un cycle hydrocarboné ou hétéro-hydrocarboné comprenant de 4 à 7 atomes de carbone, et éventuellement comportant 1, 2, 3 ou 4, de préférence 1 ou 2, hétéroatomes indépendamment choisis parmi oxygène, azote et soufre, préférentiellement avec un maximum de deux hétéroatomes dans le cycle, le cycle pouvant lui-même être substitué par une ou plusieurs chaînes alkyles saturées, linéaires ou ramifiées, comportant un ou plusieurs hétéroatomes indépendamment les uns des autres choisis parmi oxygène, azote et soufre, ou une combinaison de ces groupes avec le cycle hétéro-hydrocarboné comprenant de 4 à 7 atomes de carbone. De tels monomères sont par exemple décrits en détail dans les demandes de brevets US2017321050 et US2017321108.

Selon un autre mode de réalisation de la présente invention, lorsque les atomes d'azote des fonctions amides pendantes sont di-substitués, les deux substituants peuvent former ensemble et avec l'atome d'azote qui les porte, un cycle et éventuellement former un lactame avec l'enchaînement amide.

Les substituants des atomes d'azote des fonctions amides pendantes peuvent également comprendre un ou plusieurs atome(s) d'azote, de préférence un atome d'azote. Ce ou ces atome(s) d'azote substituants des atomes d'azote des fonctions amides pendantes, peu(ven)t également avoir réagi avec un ou plusieurs agent(s) alkylant, de manière à former un cation ammonium, l'anion pouvant être choisi parmi tous les anions connus de l'homme du métier, et en particulier parmi les halogénures (par exemple chlorure, bromure), les sulfonates (par exemple méthane-sulfonate, para-toluène-sulfonate), les sulfates (par exemple méthyl-sulfate, éthyl-sulfate), les carbonates (par exemple méthyl-carbonate), et autres.

On entend par co-polymère dans cette invention, un polymère issu de la polymérisation de deux, trois ou plus monomères différents. En particulier, on entend par ter-polymère dans la présente invention, un polymère issu de la polymérisation de trois monomères différents.

Les co-polymères utilisables dans le cadre de la présente invention peuvent être des co-polymères à blocs ou à greffons, aléatoires, périodiques ou statistiques, de préférence de faible masse moléculaire. Par faible masse moléculaire, on entend une masse comprise entre 1000 et 5000 unités de masse atomique (uma) et de préférence entre 1500 et 4000 uma.

Selon encore un autre mode de réalisation de l'invention, les monomères qui peuvent être utilisés pour former les co-polymères avec des monomères à fonction amide peuvent être choisis parmi des monomères comportant une fonction amine. Ces fonctions amines peuvent être des amines primaires (-NH₂), secondaires (-NHRₐ) ou tertiaires (-NRₐR_{b}), de préférence des amines secondaires ou tertiaires. Les radicaux Rₐ et R_{b} substituants des amines secondaires ou tertiaires peuvent être identiques ou différents et indépendamment les uns des autres choisis parmi les chaînes hydrocarbonées saturées ou partiellement insaturés, linéaires ou ramifiés comprenant de 1 à 30 atomes de carbone, préférentiellement de 1 à 20 atomes de carbone, de préférence encore de 1 à 8 atomes de carbone.

Les radicaux Rₐ et R_{b} peuvent éventuellement et avec l'atome d'azote qui les porte former un cycle hétéro-hydrocarboné comportant de 3 à 8, de préférence de 4 à 7, sommets avec éventuellement 1, 2, 3 ou 4 hétéroatomes indépendamment choisis parmi oxygène, azote et soufre, de préférence avec un maximum de 2 hétéroatomes dans le cycle, le cycle pouvant être substitué par une ou plusieurs entités choisies parmi chaînes hydrocarbonées linéaires ou ramifiés, saturées ou partiellement insaturées et parmi les hétéroatomes indépendamment choisis parmi oxygène, azote et soufre. De tels monomères sont notamment décrits en détail dans les publications des demandes de brevets US2017321050 et US2017321108.

Les substituants Rₐ et R_{b} des atomes d'azote des fonctions amines pendantes précitées peuvent également comprendre un ou plusieurs atome(s) d'azote, de préférence un (1) atome d'azote. Ce ou ces atome(s) d'azote substituants des atomes d'azote des fonctions amines pendantes, peu(ven)t également avoir réagi avec un ou plusieurs agent(s) alkylant, de manière à former un cation ammonium, l'anion pouvant être de tout type bien connu de l'homme du métier et de préférence choisi parmi les halogénures (par exemple chlorure, bromure), les sulfonates (par exemple méthane-sulfonate, para-toluène-sulfonate), les sulfates (par exemple méthyl-sulfate, éthyl-sulfate), les carbonates (par exemple méthyl-carbonate), et autres.

Selon un mode de réalisation de l'invention, le ou les monomères qui peuvent être utilisés pour former les co-polymères explicités ci-dessus peuvent être de tout type et sont avantageusement choisis parmi les monomères de formule (I) : 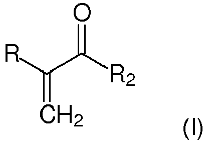 dans laquelle :
- R représente -H ou -CH₃, et
- R₂ est choisi parmi l'atome d'hydrogène, et un radical alkyle, alkoxy, hydroxy, N-alkylaminoalkoxy, N,N-dialkylaminoalkoxy, hydroxyalkoxy, radical cyclique, saturé ou partiellement ou totalement insaturé, comportant de 3 à 8 sommets, de préférence 4 à 7 sommets, et éventuellement un ou plusieurs hétéroatomes, identiques ou différents, choisis parmi oxygène, azote et soufre, et éventuellement substitués par un ou plusieurs groupements choisis parmi alkyle, halogène, carbonyle, hydroxy, alkoxy, amino, nitro et cyano.

Les monomères de formule (I) peuvent être par exemple et de manière non limitative, choisis parmi l'acide acrylique, les acrylates d'alkyle, les acrylates de N-alkylaminoalkyle et les acrylates de N,N-dialkylaminoalkyle ainsi que leurs halogénures, en particulier chlorures, d'alkyle quaternaires correspondants, les acrylates d'hydroxyalkyle, l'acide méthacrylique, les méthacrylates d'alkyle, les méthacrylates de N-alkylaminoalkyle et les méthacrylates de N,N-dialkylaminoalkyle, ainsi que leurs halogénures, en particulier chlorures, d'alkyle quaternaires correspondants, les méthacrylates d'hydroxyalkyle, et autres, ainsi que les mélanges de deux ou plusieurs d'entre eux en toutes proportions.

Dans la présente description, le terme « alkyl » ou « alkyle » représente, sauf indication contraire, un radical hydrocarboné saturé, linéaire ou ramifié comportant de 1 à 10 atomes de carbone, de préférence de 1 à 6 atomes de carbone, de préférence encore de 1 à 4 atomes de carbone.

D'autres monomères encore peuvent entrer dans la formation des co-polymères précités, et parmi ceux-ci on peut citer, sans être toutefois limitatif, les monomères contenant au moins une fonction hydroxyle et/ou au moins un groupe fonctionnel convertible en fonction hydroxyle. De tels monomères sont notamment décrits en détail dans la demande internationale WO2010117660. Parmi ces monomères, on peut citer tout particulièrement l'acétate de vinyle.

Dans la composition selon la présente invention, le co-polymère dont au moins un des motifs répétitifs comprend au moins une fonction amide est un co-polymère obtenu par polymérisation d'au moins un monomère comportant une fonction amide pendante, et de préférence le co-polymère est un co-polymère obtenu par polymérisation de deux ou plusieurs monomères comportant une fonction amide pendante, par exemple choisis parmi les (méth)acrylamides substitués ou non, les monomères vinyliques à groupements lactames, en particulier les vinylpyrrolidones, les vinylcaprolactames.

Selon un mode de réalisation préféré de la présente invention, les monomères utilisés pour la préparation du co-polymère dont au moins un des motifs répétitifs comprend au moins une fonction amide (co-polymère a) de la composition de la présente invention) sont choisis parmi les monomères de type vinylcaprolactame (VCap) et de type vinylpyrrolidone (VP).

Par co-polymères résultant de la copolymérisation d'au moins un monomère vinylique à groupements amide et/ou amide cycliques (lactames) avec un monomère contenant une fonction hydroxyle et/ou un groupe fonctionnel convertible en fonction hydroxyle, on entend les co-polymères issus par exemple de la polymérisation des monomères de type vinylpyrrolidones (VP), vinylcaprolactames (VCap), acrylamides et/ou méthacrylamides avec des monomères contenant une fonction hydroxyle et/ou un groupe fonctionnel convertible en fonction hydroxyle et notamment les monomères décrits ainsi en détail dans la demande internationale WO2010117660.

Selon un mode de réalisation de la présente invention, les co-polymères sont obtenus par co-polymérisation de vinylcaprolactame (VCap) et/ou vinylpyrrolidone (VP) avec de l'acétate de vinyle et plus préférentiellement par co-polymérisation de vinylcaprolactame (VCap) avec de l'acétate de vinyle. Ces co-polymères sont connus et disponibles dans le commerce ou facilement préparés à partir de modes opératoires connus et décrits dans la littérature scientifique, sur internet, dans les demandes de brevets, et par exemple dans le document précité WO2010117660.

Plus particulièrement, des exemples non limitatifs des monomères précités sont la vinylpyrrolidone (VP), le vinylcaprolactame (VCap), l'acrylamide, le méthacrylamide, le N-alkylacrylamide, le N-alkylméthacrylamide, le N,N-dialkylacrylamide, le N,N-dialkylméthacrylamide, le N,N-dialkylaminoalkylacrylamide, le N,N-dialkylaminoalkylméthacrylamide, ainsi que leurs sels (halogénures, sulfonates, sulfates, carbonates et autres) d'alkylammonium quaternaires.

Selon un mode de réalisation de l'invention, le co-polymère a) est un co-polymère obtenu par co-polymérisation de monomères de type vinylcaprolactame (VCap) et de type vinylpyrrolidone (VP). Par exemple, lorsque le monomère de type vinylcaprolactame (VCap) est co-polymérisé en présence d'un monomère de type vinylpyrrolidone (VP), le ratio massique VCap/VP est avantageusement compris entre 95/5 et 30/70, préférentiellement entre 75/25 et 50/50 et encore plus préférentiellement entre 60/40 et 50/50.

Selon un autre mode de réalisation préféré de cette invention, le co-polymère a) de la composition selon la présente invention est un co-polymère VCap/VOH obtenu par polymérisation de N-vinyl-2-caprolactame et d'acétate de vinyle. Cette copolymérisation est avantageusement réalisée dans un solvant adéquat connu de l'homme du métier (butylglycol par exemple) suivie par une hydrolyse du polymère en milieu alcalin. Le ratio massique VCap/VOH dans le co-polymère final est compris entre 30/70 et 95/5, de préférence entre 60/40 et 85/15 et encore plus préférentiellement entre 65/35 et 75/25. On peut citer par exemple, parmi les co-polymères d'intérêt pour cette invention, le produit vendu par la société Ashland Inc. sous la dénomination commerciale Inhibex BIO 800.

La quantité totale du ou des co-polymères a) présents dans la composition de l'invention, est de préférence comprise entre 1% et 50% en poids, plus préférentiellement entre 5% et 40% en poids, et mieux encore entre 10% et 30% en poids, par rapport au poids total de la composition.

Comme indiqué précédemment, le polyéther b) de la composition selon l'invention présente un poids moléculaire en poids (M_{W}) supérieur à 60 g.mol⁻¹, de préférence encore supérieur à 100 g.mol-¹. Dans un mode de réalisation préféré, le polyéther b) de la composition selon l'invention présente un poids moléculaire en poids (M_{w}) supérieur à 60 g.mol⁻¹, de préférence encore supérieur à 100 g.mol⁻¹, plus particulièrement supérieur à 160 g.mol⁻¹, mieux encore supérieur à 200 g.mol⁻¹, et tout particulièrement supérieur à 260 g.mol⁻¹, bornes incluses.

Au sens de la présente invention, il doit être compris que ledit polyéther b) peut être de tout type connu de l'homme du métier, éventuellement fonctionnalisé, et en particulier un polyéther linéaire, un polyéther branché ou encore un polyéther étoile ou hyperbranché, ou « star polyether » ou encore « hyperbranched polyether » en langue anglaise. La présente invention englobe également les polyéthers de type polyéthers « peigne » ou de type dendrimères. Une famille de tels polyéthers est par exemple décrite dans la demande WO2019185490.

Selon un mode de réalisation, le polyéther b) est un polyéther comportant le motif z) suivant : 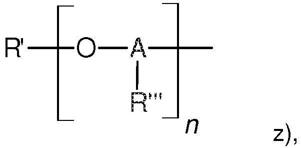 dans laquelle,
- R' et R‴, identiques ou différents, sont choisis indépendamment l'un de l'autre parmi :
   - l'atome d'hydrogène,
   - une chaîne hydrocarbonée, linéaire, ramifiée ou cyclique, saturée ou partiellement ou totalement insaturée, comprenant de 1 à 30 atomes de carbone, de préférence de 1 à 20 atomes de carbone, de préférence encore de 1 à 10, plus préférentiellement de 1 à 6, mieux encore de 1 à 5 atomes de carbone, bornes incluses, éventuellement interrompue par un ou plusieurs, et de préférence un, atome(s) d'oxygène, et éventuellement substitué par un ou plusieurs radicaux choisis parmi -SR₃, -SOR₃, -SO₂R₃, -SO₃R₃, -S⁺O₃ X⁻,-S⁺R₃R₄ X-, --P(=O)R₅R₆, -OR₇, -C(=O)R₇, et-C(=O)OR₇,
- R₇, R₃ et R₄, identiques ou différents, représentent, indépendamment l'un de l'autre, l'atome d'hydrogène, une chaîne hydrocarbonée, linéaire, ramifiée ou cyclique, saturée ou partiellement ou totalement insaturée, comprenant de 1 à 30 atomes de carbone, de préférence de 1 à 20, de préférence encore de 1 à 10, plus préférentiellement de 1 à 6, mieux encore de 1 à 5 atomes de carbone, bornes incluses, éventuellement interrompue par un ou plusieurs atome(s) d'oxygène,
- R₅ et R₆, identiques ou différents, représentent indépendamment l'un de l'autre, l'atome d'hydrogène, un radical -OR₃, ou une chaîne hydrocarbonée, linéaire, ramifiée ou cyclique, saturée ou partiellement ou totalement insaturée, comprenant de 1 à 30 atomes de carbone, de préférence de 1 à 20, de préférence encore de 1 à 10 atomes de carbone, plus préférentiellement de 1 à 6, mieux encore de 1 à 5 atomes de carbone, bornes incluses, éventuellement interrompue par un ou plusieurs atome(s) d'oxygène,
- A représente une chaîne hydrocarbonée, linéaire, ramifiée ou cyclique, saturée ou partiellement ou totalement insaturée, comprenant de 1 à 10 atomes de carbone, de préférence de 1 à 6, de préférence encore de 1 à 5 atomes de carbone, bornes incluses, éventuellement interrompue par un ou plusieurs, et de préférence un, atome(s) d'oxygène,
- X⁻ représente un anion choisi parmi les anions d'atome d'halogène, tel que chlore, brome ou iode, un anion sulfate, un anion sulfonate, un anion méthanesulfonate, un anion carbonate, un anion hydrogénocarbonate, un anion acétate, propionate, et
- n représente un nombre entier compris entre 1 et 200, de préférence entre 1 et 100, de préférence encore entre 1 et 60.

Selon un mode de réalisation préféré de la présente invention, le polyéther b) est un polyéther linéaire ou branché représenté par la formule générale (II) ci-dessous : 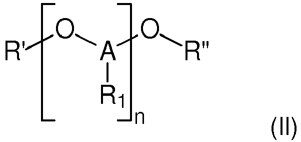 dans laquelle,
- R₁ est choisi parmi l'atome d'hydrogène et un radical alkyle comprenant de 1 à 6 atomes de carbone, de préférence de 1 à 4 atomes de carbone, de préférence le radical méthyle et le radical éthyle,
- R' est tel que défini précédemment,
- R" est choisi parmi :
   - l'atome d'hydrogène,
   - une chaîne hydrocarbonée, linéaire, ramifiée ou cyclique, saturée ou partiellement ou totalement insaturée, comprenant de 1 à 30 atomes de carbone, de préférence de 1 à 20, de préférence encore de 1 à 10 atomes de carbone, plus préférentiellement de 1 à 6, mieux encore de 1 à 5 atomes de carbone, bornes incluses, éventuellement interrompue par un ou plusieurs, et de préférence un, atome(s) d'oxygène, et éventuellement substitué par un ou plusieurs radicaux choisis parmi -SR₃, -SOR₃, -SO₂R₃, -SO₃R₃, -S⁺O₃ X⁻,-S⁺R₃R₄ X⁻, --P(=O)R₅R₆, -OR₇, -C(=O)R₇, et-C(=O)OR₇,
- A, n, R₃, R₄, R₅, R₆, R₇ et X⁻, sont tels que définis précédemment.

Selon un autre mode de réalisation, le polyéther b) est un polyéther étoile ou hyperbranché, comportant plus de 2, et par exemple de 3 à 30, de préférence de 3 à 20, plus préférentiellement de 3 à 12 motifs, de préférence encore de 3 à 6 motifs et généralement 3 ou 4 motifs z) tel que défini précédemment. Selon un mode de réalisation, les motifs de formule z) sont branchés en étoile sur un noyau central, ledit noyau central pouvant être de tout type connu de l'homme du métier et en particulier un atome de carbone, étant entendu que les motifs de formule z) peuvent être identiques ou différents dans le polyéther étoile ou hyperbranché.

Lorsque n est strictement supérieur à 1, il doit être compris que les radicaux R₁ et A peuvent être identiques ou différents, de sorte que le polyéther de formule (II) peut comporter des enchaînements alternés, en blocs ou aléatoires.

Le polyéther peut être un homo-polymère et peut également être un co-polymère à blocs, par exemple composé de deux ou plusieurs blocs, par exemple choisis parmi ceux répondant à la formule générale (II) ci-dessus. Le polyéther peut aussi être un co-polymère statistique composé de deux ou plusieurs monomères éther différents.

Des exemples non limitatifs de ces polyéthers sont le polyoxyméthylène glycol, le polyéthylène glycol, le polypropylène glycol. Le polyéther peut également être un polyéther alkyle, et par exemple un polyéther glycéride (mono-, di- et/ou triglycéride), ou encore un polyéther cycloalkyle, par exemple le polyfurane, le polytétrahydrofurane, et autres.

Parmi les polyéthers b) de formule (II) ci-dessus, on préfère ceux pour lesquels R' et R", identiques ou différents, sont choisis indépendamment l'un de l'autre parmi l'atome d'hydrogène et un radical alkyle comprenant de 1 à 4 atomes de carbone, de préférence le radical méthyle et le radical éthyle, de préférence le radical méthyle.

Selon encore un autre mode de réalisation, parmi les polyéthers b) de formule (II) ci-dessus, on préfère ceux pour lesquels l'un des deux R' et R" représente l'atome d'hydrogène et l'autre représente un radical alkyle comprenant de 1 à 4 atomes de carbone, de préférence le radical méthyle et le radical éthyle, de préférence le radical méthyle.

Des exemples de polyéthers qui peuvent avantageusement être utilisés dans le cadre de la présente invention comprennent, à titre d'exemples non limitatifs le triméthylolpropane triglycidyl éther, le néopentyl glycol diglycidyl éther, le poly(éthylène glycol) glycidyl éther, le poly(propylène glycol) glycidyl éther, le poly(éthylène glycol) diglycidyl éther, le poly(propylène glycol) diglycidyl éther, le poly(éthylène glycol) triglycidyl éther, le poly(propylène glycol) triglycidyl éther, le poly(éthylène glycol) tétraglycidyl éther, le poly(propylène glycol) tétraglycidyl éther, le glycérol propoxylate triglycidyl éther, le Poly(éthylène glycol) méthyl ether, le poly(éthylène glycol) méthyl éther acétate, le polyethylene glycol dimethyl ether, le polyéthylène glycol, le polypropylène glycol, le polymethylène glycol, le polybutylène glycol, le polyéthylène-block-poly(éthylène glycol), le triméthylolpropane éthoxylate, methoxypolyethylene glycol, le glycérol éthoxylate, le 4-nonylphenyl-polyethylene glycol, le glycérol propoxylate, le pentaérythritol triacrylate, le pentaérythritol propoxylate, le pentaérythritol butoxylate, le glycérol éthoxylate-co-propoxylate triol, le polyalkylène glycol acide acétique, le polyalkylène glycol acide glutarique, le polyalkylène glycol acide succinique, le polyalkylène glycol alkyl éther acide carboxylique, (et par exemple les produits commercialisés sous les dénominations PMD-7002, PMD-7022, PMD-7042 disponibles chez Creative PEGworks : https://www.creativepegworks.com), les polyéther étoiles, par exemple ceux commercialisés sous les dénominations PSB-480, PSB-483, PSB-466, PSB-469, PSB-4040, PSB-4041, PSB-831, PSB-836, PSB-8021, PSB-8031 disponibles également chez Creative PEGworks, les polyéther branchés, hyperbranchés, dendrimères, tels que par exemple ceux commercialisés sous les dénominations HBP-121, HBP-122, HBP-123, HBP-124, PDP-301, PDP-302, PDP-303, PDP-311, PDP-312, PDP-313 et disponibles chez Creative PEGworks, les polyéthers comportant des groupes glycidyle, comme par exemple ceux commercialisés par Creative PEGworks sous les dénominations commerciales PLS-280, PLS-279, PLS-278, PLS-277, PSB-281, PSB-282, PSB-2960, PSB-2861, PSB-350, PSB-351, PSB-352, PSB-353, PSB-354, PSB-355, PSB-356, PSB-470, PSB-471, PSB-473, PSB-475, PSB-871, PSB-872, et PSB-874.

La plupart des polyéthers utilisables dans le cadre de la présente invention sont disponibles chez Creative PEGworks, d'autres polyéthers sont également disponibles par exemple chez Sigma Aldrich.

La quantité totale du ou des polyéther(s) présent(s) dans la composition de l'invention, est généralement comprise entre 0,5% et 90% en poids, de préférence entre 0,5% et 50% en poids, de préférence entre 1% et 30% en poids, et plus préférentiellement entre 5% et 20% en poids, par rapport au poids total de la composition.

La composition selon la présente invention peut éventuellement comprendre un ou plusieurs solvants organiques. Les solvants organiques utilisables sont avantageusement choisis parmi les alcools alkyliques comportant de 1 à 4 atomes de carbone, les éthers de glycol et leurs mélanges. Selon un aspect préféré, le solvant organique utilisé est un glycol ou un mélange de glycol, et de manière tout particulièrement préférée, le solvant organique est le butylglycol.

La quantité totale de solvant(s) organique(s) présent(s) dans la composition de l'invention est généralement comprise entre 30% et 90%, de préférence entre 50% et 90%, et plus préférentiellement entre 60% et 85% en poids, par rapport au poids total de la composition.

La composition selon la présente invention peut aussi comprendre un ou plusieurs autres additifs communément employés dans les productions pétrolières et gazières, comme par exemple ceux choisis parmi les inhibiteurs de corrosion, les inhibiteurs de corrosion de voûte, les anti-hydrates cinétiques, les anti-agglomérants d'hydrates, les anti-dépôts minéraux, les désémulsionnants, les biocides, les déshuilants, les additifs antimousse, les inhibiteurs et dispersants de paraffine, les inhibiteurs et dispersants d'asphaltènes, les piégeurs (« scavengers » en langue anglaise) d'oxygène, d'hydrogène sulfuré ou de mercaptans, les inhibiteurs de traînée ou de friction («drag reducer » en langue anglaise) et autres colorants, arômes, conservateurs, si nécessaire ou si souhaité.

La composition selon la présente invention peut être facilement préparée par exemple par mélange des divers composants, selon tout moyen bien connu de l'homme du métier, dans un ordre quelconque, selon les compatibilités et les miscibilités des composants entre eux. Les compositions peuvent ainsi être préparées par mélange au moyen d'un agitateur, à température ambiante et à pression atmosphérique.

II a été observé de manière tout à fait surprenante que la composition selon l'invention permet d'empêcher, de limiter ou tout au moins de retarder de plusieurs heures, voire de plusieurs jours, la formation et/ou l'agglomération de cristaux d'hydrates, notamment pour des sub-coolings supérieurs à 10°C. Il a en outre été observé que la composition utile dans le cadre de la présente invention entraîne souvent un temps d'induction plus long que les compositions ou produits actuellement disponibles dans le commerce.

Une conséquence directe est que la composition selon la présente l'invention permet ainsi de travailler à des températures plus basses que les températures actuelles tout en augmentant le rendement d'extraction et notamment le rendement de production de pétrole et/ou de gaz.

Il a en outre été découvert que cette composition est efficace à de faibles concentrations, par exemple à des dosages compris entre 0,1% et 10% en poids, préférentiellement entre 0,2% et 7% en poids, de préférence encore entre 0,2% et 5% en poids et mieux encore entre 1% et 4% en poids, par rapport au poids total de la phase aqueuse du fluide susceptible de former des hydrates, et tout particulièrement entre 0,2% et 4%, typiquement entre 0,2% et 3%, en particulier entre 1% et 3% en poids. La composition selon la présente invention est également peu coûteuse, facile à produire et peu toxique.

Ainsi, et selon un autre aspect, la présente invention concerne un procédé pour empêcher, limiter ou tout au moins retarder, la formation et/ou l'agglomération d'hydrates de gaz, comportant une étape d'ajout d'une composition telle que définie ci-dessus dans un fluide susceptible de former des hydrates, comme décrit précédemment dans ce texte, et en particulier dans un fluide de production comprenant une phase aqueuse et un ou plusieurs gaz.

Plus spécifiquement, la teneur totale de la phase aqueuse, présente dans le fluide de production, est généralement comprise entre 10% et 90% en poids, par rapport au poids total du fluide de production, c'est-à-dire par rapport au poids total des fluides (phase aqueuse et hydrocarbures). Cependant, le traitement de fluide à très forte teneur en phase aqueuse ou contenant moins de 10% de phase aqueuse, voire moins de 1% de phase aqueuse ne sortirait pas du domaine de l'invention.

La teneur totale en phase aqueuse définie ci-dessus correspond à la proportion totale de phase aqueuse initialement présente dans le fluide de production, c'est-à-dire dans le mélange initial (phase aqueuse et les autres liquides d'extraction bruts tels que les hydrocarbures, les condensats, ...).

La phase aqueuse du fluide de production comprend en outre un ou plusieurs gaz dissous susceptibles de former avec l'eau des hydrates de gaz à une température et à une pression donnée. Certains des gaz présents dans la phase aqueuse du fluide de production sont les gaz dits « invités », et comprennent généralement le méthane, l'éthane, le propane, le butane, le gaz carbonique, l'hydrogène sulfuré, et leurs mélanges.

La composition selon l'invention est ajoutée en une quantité entre 0,1% et 10% en poids, préférentiellement entre 0,2% et 7% en poids, de préférence encore entre 0,2% et 5% en poids et mieux encore entre 1% et 4% en poids, par rapport au poids total de la phase aqueuse dans un fluide de production, et tout particulièrement entre 0,2% et 4%, typiquement entre 0,2% et 3%, en particulier entre 1% et 3% en poids.

La composition peut être introduite dans le fluide de production de manière continue, discontinue, régulièrement ou non, ou de manière temporaire, en une ou plusieurs fois. L'introduction de la composition est généralement effectuée en amont de la zone à risque de présence d'hydrates, que ce soit en surface, en tête de puits ou en fond de puits.

Selon un autre mode de réalisation du procédé de l'invention, le fluide traité par la composition selon l'invention est une boue de forage ou un fluide de complétion et plus généralement tout fluide extrait du sous-sol. Dans ce mode de réalisation, la composition est introduite dans la boue de forage ou dans le fluide de complétion, avant ou pendant l'injection de la boue de forage ou du fluide de complétion.

Selon un mode de réalisation de l'invention, la composition, majoritairement présente dans la phase aqueuse du fluide de production, peut être recyclée ou régénérée selon toute méthode connue de l'homme du métier et notamment, sans être limitatif et après séparation de la phase aqueuse présente dans le fluide de production, par concentration ou distillation de ladite phase aqueuse.

Enfin, la présente invention a également pour objet l'utilisation d'une composition telle que définie ci-dessus pour limiter, retarder, voire empêcher la formation et/ou l'agglomération d'hydrates, et de préférence dans un procédé d'extraction de pétrole et/ou de gaz et/ou de condensats.

L'invention sera mieux comprise à la lumière des exemples suivants, donnés à des fins d'illustration seulement et qui n'ont pas pour but de restreindre la portée de l'invention, définie par les revendications annexées.

### EXEMPLES

### Exemple 1

L'efficacité cinétique de différentes compositions anti-hydrates a été testée sur un mélange comprenant :
- une phase gazeuse, constituée de 98% (molaire) de méthane, et 2% (molaire) de propane ; et
- une phase aqueuse comprenant une solution de NaCl à 1 g.L⁻¹.

Les tests ont été réalisés à une pression de 135 bars (13,5 MPa), valeur de pression qui est caractéristique des conditions d'exploitation où il existe un risque de formation d'hydrate. La température d'équilibre de ce mélange à 135 bars (13,5 MPa) est d'environ 19,5°C. En d'autres termes, à 135 bars (13,5 MPa), les hydrates de gaz se forment lorsque la température devient inférieure ou égale à 19,5°C.

Les essais sont réalisés dans une cellule agitée mécaniquement et contrôlée en température par une double enveloppe. La cellule est de forme cylindrique d'un volume interne d'environ 292,6 cm³ (149 mm de hauteur pour 50 mm de diamètre). Elle est en acier résistant à 200 bars (20 MPa) et protégée par soupape. La pression de service est assurée par un surpresseur de gaz AG-30 de marque Haskel. La cellule est instrumentée pour pouvoir suivre en continu la pression interne, le couple d'agitation et la température.

Afin de réaliser les évaluations des différents produits, on commence par introduire dans la cellule, sous vide par aspiration 250 cm³ de phase aqueuse contenant l'additif à évaluer, ou sans additif (référence). Après équilibrage de la température à 19,5°C, le mélange gazeux est chargé, sous agitation, dans la cellule jusqu'à obtenir une pression stable de 135 bars (13,5 MPa).

L'ensemble est ensuite chauffé et maintenu à 30°C pendant 24 heures pour effacer l'histoire thermique du mélange puis descendu à la vitesse de 0,2°C/min jusqu'à la température correspondant au sub-cooling visé (ici 8,5°C et 4,5°C pour des sub-cooling respectifs de 11 °C et 15°C).

L'efficacité cinétique des compositions anti-hydrates est mesurée à différents sub-cooling (11 °C et 15°C) mais aussi à différents dosages. Le dosage correspond ici à la quantité (poids) de composition anti-hydrate introduite dans la phase aqueuse par rapport au poids de l'eau.

La performance cinétique des compositions anti-hydrate est déterminée par la mesure du temps de retard à la formation des cristaux d'hydrates. Ce temps, également appelé temps d'induction, est exprimé en heures ou en jours. En d'autres termes, plus le temps de d'induction est long, plus l'anti-hydrate est performant.

Ici, ce temps est mesuré à partir du moment où la température dans la cellule atteint la température cible de l'essai correspondant au sub-cooling étudié (8,5°C et 4,5°C pour des sub-cooling respectifs de 11 et 15°C) et la pression dans la cellule est stabilisée. Le point final de mesure du temps d'induction correspond au début de formation des hydrates. Il est repéré sur la courbe de pression en fonction du temps par le point où la pression commence à baisser dans la cellule (baisse de pression correspondant à la consommation de gaz pour former des hydrates solides) et confirmé par une augmentation du couple de l'agitateur (viscosification du milieu qui se charge en solide) et éventuellement un très léger pic exothermique sur la courbe de température.

La composition A, selon l'invention, et les compositions comparatives B et C ont été préparées par mélange des différents composants dont les quantités sont exprimées dans le tableau 1 ci-dessous.

Sauf indication contraire, toutes les quantités sont indiquées en pourcentage en poids par rapport au poids total de la composition.

**-- Tableau 1 --**

| | Composition A (invention) | Composition B (comparatif) | Composition C (comparatif) |
|---|---|---|---|
| PVP/PVCap 1:1^{(a)} | 20% | 30% | - |
| PPG 400^{(b)} | 10% | - | 30% |
| 2-butoxyéthanol | 70% | 70% | 70% |

| | | | |
|---|---|---|---|
| ^{(a)} Co-polymère vinylpyrrolidone (VP) / Vinylcaprolactam (Vcap) 1:1. ^{(b)} Polypropylène glycol de poids moléculaire de 400 g.mol⁻¹. | | | |

L'efficacité cinétique des compositions anti-hydrates, pour un sub-cooling de 11 °C, est évaluée pour un dosage de 1% en poids pour chacune des compositions A (invention), B, C (comparatifs). Chacune des compositions à tester est introduite dans la phase aqueuse et l'expérience est menée comme décrit ci-dessus.

La performance cinétique de ces compositions, caractérisée par le temps d'induction, a été mesurée deux fois, et la moyenne de ces mesures est exprimée dans le tableau 2 ci-dessous.

**-- Tableau 2 --**

| Résultats pour un sub-coolinq de 11 °C | | | |
|---|---|---|---|
| | Composition A (invention) | Composition B (comparatif) | Composition C (comparatif) |
| Temps d'induction Dose = 1% | 168 heures | 72 heures | 30 heures |

Les résultats ci-dessus montrent que, pour un sub-cooling de 11°C, les compositions de la présente invention sont plus performantes que les compositions comparatives. En effet, dans la composition selon la présente invention où, lorsque le co-polymère vinylcaprolactame/vinylpyrrolidone est en mélange avec un polyéther (composition A), il faut 168 heures pour voir l'apparition d'hydrates de gaz (pour un dosage de 1% en poids).

À titre de comparaison, la composition C ne comportant que le solvant et le même polyéther ne retarde que de 30 heures l'apparition des hydrates. La composition B comportant uniquement le solvant et le même co-polymère ne permet de retarder leur formation que de 72 heures.

Les mêmes tests sont ensuite réalisés pour un sub-cooling plus important, maintenant de 15°C. Chacune des compositions A (invention), et B, C (comparatifs) est évaluée, selon le protocole décrit ci-dessus, pour une dose de 1% de chacune des compositions A (invention), et B, C (comparatifs).

La performance cinétique de ces compositions a été mesurée deux fois, et la moyenne de ces mesures est exprimée dans le tableau ci-dessous.

**-- Tableau 3 --**

| Résultats pour un sub-coolinq de 15°C | | | |
|---|---|---|---|
| | Composition A (invention) | Composition B (comparatif) | Composition C (comparatif) |
| Temps d'induction Dose = 1% | 6 heures | 3 heures | 0,75 heures |

Ces résultats mènent à des conclusions similaires. À un dosage de 1% en poids, la composition comparative B retarde la formation d'hydrates de gaz de seulement 3 heures, alors que la composition selon l'invention (composition A) retarde cette formation de 6 heures.

Il est ainsi clairement établi un avantage par rapport à l'art antérieur, en ce que la composition selon la présente invention entraîne un temps d'induction plus long pour des sub-coolings plus importants (15°C) que celui observé avec les compositions de l'art antérieur. Il est ainsi possible de travailler à des températures plus basses que les températures actuelles tout en augmentant le rendement de production de pétrole et/ou de gaz.

### Exemple 2

La mesure de la température de point de trouble a pour objectif de déterminer si la composition d'anti-hydrate peut être injectée dans la ligne transportant les fluides (eau, gaz, condensat, pétrole) lorsqu'ils sont encore chauds, sans entraîner de dépôt ou au risque de bouchage.

La composition D, selon invention, et la composition comparative E (conforme à l'enseignement du brevet CN104357034) ont été préparées par mélange des différents composants dont les quantités sont exprimées dans le tableau 4.

Sauf indication contraire toutes les quantités sont indiquées en pourcentage en poids par rapport au poids total de la composition.

**-- Tableau 4 --**

| | Composition D (invention) | Composition E (comparatif) |
|---|---|---|
| PVP/PVCap 1:1^{(a)} | 66% | - |
| PVCap^{(b)} | - | 20% |
| PVP 10K^{(c)} | - | 40% |
| PPG 400^{(d)} | 33% | 40% |

| | | |
|---|---|---|
| ^{(a)} Co-polymère vinylpyrrolidone (VP)/vinylcaprolactame (Vcap) 1:1. ^{(b)} Polymère vinylcaprolactame. ^{(c)} Polymère vinylpyrrolidone de poids moléculaire de 10 000 g.mol⁻¹. ^{(d)} Polypropylène glycol de poids moléculaire de 400 g.mol⁻¹. | | |

Deux solutions aqueuses à 1 g et 30 g de chlorure de sodium (NaCl) par litre sont préparées à 20 °C. À partir de ces solutions, pour chaque composition D et E sont préparées dans des tubes à essais, des solutions à 1% en poids dans des solutions à 1 g et 30 g de NaCl par litre. Les solutions d'anti-hydrates cinétiques sont placées dans une enceinte thermostatée et la température est augmentée par paliers de 5 °C à partir de 20°C. Pour chaque palier la température est maintenue constante pendant 1h. À 20°C, toutes les solutions sont limpides.

Le point de trouble est déterminé visuellement quand un trouble apparaît dans la solution et est exprimé dans le tableau 5 ci-dessous.

**-- Tableau 5 --**

| | Composition D (invention) | | Composition E (comparatif) | |
|---|---|---|---|---|
| Salinité de la solution | 1 g.L⁻¹ | 30 g.L⁻¹ | 1 g.L⁻¹ | 30 g.L⁻¹ |
| Point de trouble (°C) | 75°C | 70°C | 45°C | 40°C |

Il ressort clairement de ces mesures que la composition selon la présente invention présente un point de trouble plus élevé que la composition selon l'art antérieur. La composition selon la présente invention peut ainsi être injectée dans la ligne transportant les fluides (eau, gaz, condensat, pétrole) à des températures plus élevées que les températures actuelles, ce qui représente un avantage industriel important.

### Exemple 3

La mesure du pouvoir moussant a pour objectif de déterminer si la composition anti-hydrate peut être injectée dans la ligne transportant les fluides (eau, gaz, pétrole, condensat) sans gêner ou en gênant de manière limitée les opérations de traitement des fluides en aval. En effet ces opérations comprennent notamment une ou plusieurs étapes de séparation gaz/liquide, étape qui peut être rendue difficile à réaliser en cas de moussage excessif, des quantités plus ou moins importantes de liquide pouvant être entraînées avec le gaz.

Le pouvoir moussant de la composition est déterminé en comparant les compositions D et E de l'exemple précédent qui ont été préalablement mélangées à du 2-butoxyéthanol (70% de solvant et 30% de formulation). On prépare 100 mL d'une solution aqueuse à 1 g de NaCl par litre que l'on introduit dans une éprouvette graduée de 1 litre.

La solution est barbotée au diazote introduit par un fritté de porosité 2 à un débit de 2,8 L.min⁻¹ à 20°C. On introduit alors rapidement 1% en poids par rapport à la masse d'eau de la composition solvantée à tester dans l'éprouvette et le barbotage est maintenu pendant 2 minutes. Avec la composition de l'invention (D), on observe la formation de 100 mL de mousse pendant les 2 minutes de barbotage, puis cette mousse disparaît en 3 secondes. Avec la composition comparative (E), plus de 900 mL de mousse sont formés en 20 secondes puis disparaissent en 30 secondes après l'arrêt du barbotage.

Il est ainsi clairement établi un avantage par rapport à l'art antérieur, en ce que la composition selon la présente invention présente un pouvoir moussant moins important lors de son injection dans la ligne transportant les fluides eau, gaz, condensat, pétrole.

### Exemple 4

L'efficacité cinétique de différentes compositions anti-hydrates a été testée sur des mélanges selon le même mode opératoire détaillé dans l'exemple 1.

L'efficacité cinétique de différentes compositions anti-hydrates a été testée sur un mélange comprenant :
- une phase gazeuse, constituée de 98% molaire de méthane, et 2% molaire de propane, et
- une phase aqueuse comprenant une solution de NaCl à 1 g.L-¹.

Les tests ont été réalisés à une pression de 129 bars (12,9 MPa) à 30°C, valeur de pression qui est caractéristique des conditions d'exploitation où il existe un risque de formation d'hydrate.

L'ensemble est ensuite chauffé et maintenu à 30°C pendant 24 heures pour effacer l'histoire thermique du mélange puis descendu à la vitesse de 0,2°C.min⁻¹ jusqu'à la température correspondant au sub-cooling visé (10°C, 11 °C, 13°C, 14°C et 15°C).

L'ensemble est d'abord maintenu au sub-cooling 10°Cpendant 72 heures. Si, au bout du temps sur ce palier de température, l'hydrate ne s'est pas formé, alors la température est descendue à 11 °C de sub-cooling etmaintenue pendant 24 heures. Si, au bout de 24 heures, l'hydrate ne s'est pas formé, alors l'ensemble est descendu à 13°C pendant 24 heures, puis à 14°C de sub-cooling pendait 24 heures et enfin à 15°C de sub-cooling, et ainsi de suite jusqu'à ce que l'hydrate se forme.

Les compositions F et G selon l'invention, ont été préparées par mélange des différents composants dont les quantités sont exprimées dans le tableau 6 ci-dessous, dans lequel et sauf indication contraire, toutes les quantités sont indiquées en pourcentage en poids par rapport au poids total de la composition.

**-- Tableau 6 --**

| | Composition F (invention) | Composition G (invention) |
|---|---|---|
| PVP/PVCap 1:1^{(a)} | 20% | 20% |
| PTHF 250^{(b)} | 10% | - |
| POM^{(c)} | - | 10% |
| 2-butoxyéthanol | 70% | 70% |

| | | |
|---|---|---|
| ^{(a)} Co-polymère vinylpyrrolidone (VP) / Vinylcaprolactame (Vcap) 1:1. ^{(b)} Polytétrahydrofurane de poids moléculaire de 250 g.mol⁻¹. ^{(c)} Polymethylène glycol. | | |

L'efficacité cinétique des compositions anti-hydrates est évaluée pour un dosage de 1% en poids pour chacune des compositions F et G. Chacune des compositions à tester est introduite dans la phase aqueuse et l'expérience est menée comme décrit plus haut.

Pour chaque sub-cooling, la performance cinétique de ces compositions est exprimée dans le tableau 7 ci-dessous, caractérisée par le temps d'induction. Le temps d'induction correspond au temps que met l'hydrate à se former une fois que le palier de sub-cooling voulu est atteint. Si l'hydrate ne s'est pas formé lors du temps auquel le système est maintenu à un palier alors la mention « pas de formation d'hydrate » es mentionné dans le tableau 7.

**-- Tableau 7 --**

| Dose = 1% poids | Composition F | Composition G |
|---|---|---|
| 10°C de sub-cooling (palier de 72 heures) | Pas de formation d'hydrate | Pas de formation d'hydrate |
| 11 °C de sub-cooling (palier de 24 heures) | Pas de formation d'hydrate | Pas de formation d'hydrate |
| 13°C de sub-cooling (palier de 24 heures) | Pas de formation d'hydrate | Formation après 5 heures |
| 14°C de sub-cooling (palier de 24 heures) | Formation après 13 heures | - |

À un dosage de 1% en poids, les compositions F et G selon la présente invention retardent la formation d'hydrates de gaz à 10°C et 11 °C respectivement d'au moins 72 heures et 24 heures. La composition F retarde la formation d'hydrates de gaz à 14°C de sub-cooling de 13 heures, et la composition G retarde de 5 heures la formation d'hydrates de gaz, à 13°C de sub-cooling.

## Revendications

1. Composition comprenant :
a) au moins un co-polymère dont au moins un des motifs répétitifs comprend au moins une fonction amide,
b) au moins un polyéther de poids moléculaire en poids (M_{W}) supérieur à 60 g.mol⁻¹, de préférence supérieur à 100 g.mol⁻¹, et
c) éventuellement, mais préférentiellement, au moins un solvant organique,
composition dans laquelle le co-polymère dont au moins un des motifs répétitifs comprend au moins une fonction amide est un co-polymère dont les fonctions amide sont branchées sur la chaîne polymère (fonctions amide dites « pendantes »), les atomes d'azote desdites fonctions amides peuvent être substitués, et sont de préférence substitués, de préférence encore mono-substitués, plus préférentiellement di-substitués.

2. Composition selon la revendication 1, dans laquelle le ou les monomères qui peuvent être utilisés pour former les co-polymères a) sont choisis parmi les monomères de formule (I) : 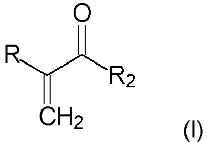 dans laquelle :
• R représente -H ou -CH₃, et
• R₂ est choisi parmi l'atome d'hydrogène, et un radical alkyle, alkoxy, hydroxy, N-alkylaminoalkoxy, N,N-dialkylaminoalkoxy, hydroxyalkoxy, radical cyclique, saturé ou partiellement ou totalement insaturé, comportant de 3 à 8 sommets, de préférence 4 à 7 sommets, et éventuellement un ou plusieurs hétéroatomes, identiques ou différents, choisis parmi oxygène, azote et soufre, et éventuellement substitués par un ou plusieurs groupements choisis parmi alkyle, halogène, carbonyle, hydroxy, alkoxy, amino, nitro et cyano.

3. Composition selon l'une quelconque des revendications précédentes, dans laquelle le co-polymère dont au moins un des motifs répétitifs comprend au moins une fonction amide est un co-polymère obtenu par polymérisation d'au moins un monomère comportant une fonction amide pendante, de préférence obtenu par polymérisation de deux ou plusieurs monomères comportant une fonction amide pendante, de préférence choisis parmi les (méth)acrylamides substitués ou non, les monomères vinyliques à groupements lactames, en particulier les vinylpyrrolidones, les vinylcaprolactames.

4. Composition selon l'une quelconque des revendications précédentes, dans laquelle le polymère dont au moins un des motifs répétitifs comprend au moins une fonction amide est un polymère obtenu par polymérisation d'un ou plusieurs monomères choisi parmi la vinylpyrrolidone (VP), le vinylcaprolactame (VCap), l'acrylamide, le méthacrylamide, le N-alkylacrylamide, le N-alkylméthacrylamide, le N,N-dialkylacrylamide, le N,N-dialkylméthacrylamide, le N,N-dialkylaminoalkylacrylamide, le N,N-dialkylaminoalkylméthacrylamide, ainsi que leurs sels d'alkylammonium quaternaires.

5. Composition selon l'une quelconque des revendications précédentes, dans laquelle la quantité totale du ou des co-polymères a) est comprise entre 1% et 50% en poids, préférentiellement entre 5% et 40% en poids, et plus préférentiellement entre 10% et 30% en poids, par rapport au poids total de la composition.

6. Composition selon l'une quelconque des revendications précédentes, dans laquelle le polyéther b) est représenté par la formule (II) ci-dessous : 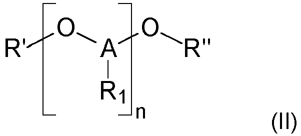 dans laquelle,
• R₁ est choisi parmi l'atome d'hydrogène et un radical alkyle comprenant de 1 à 6 atomes de carbone, de préférence de 1 à 4 atomes de carbone, de préférence le radical méthyle et le radical éthyle,
• R' et R", identiques ou différents, sont choisis indépendamment l'un de l'autre parmi l'atome d'hydrogène et une chaîne hydrocarbonée, linéaire, ramifiée ou cyclique, saturée ou partiellement ou totalement insaturée, comprenant de 1 à 10 atomes de carbone, de préférence de 1 à 6, de préférence encore de 1 à 5 atomes de carbone, bornes incluses, éventuellement interrompue par un ou plusieurs, et de préférence un, atome(s) d'oxygène,
• A représente une chaîne hydrocarbonée, linéaire, ramifiée ou cyclique, saturée ou partiellement ou totalement insaturée, comprenant de 1 à 10 atomes de carbone, de préférence de 1 à 6, de préférence encore de 1 à 5 atomes de carbone, bornes incluses, éventuellement interrompue par un ou plusieurs, et de préférence un, atome(s) d'oxygène, et
• n représente un nombre entier compris entre 1 et 200, de préférence entre 1 et 100, de préférence encore entre 1 et 60.

7. Composition selon l'une quelconque des revendications précédentes, dans laquelle le polyéther est un homo-polymère ou un co-polymère à blocs, composé de deux ou plusieurs blocs, ou un co-polymère statistique composé de deux ou plusieurs monomères éther différents.

8. Composition selon l'une quelconque des revendications précédentes, dans laquelle la quantité totale du ou des polyéther(s) est comprise entre 0,5% et 90% en poids, de préférence entre 0,5% et 50% en poids, de préférence entre 1% et 30% en poids, et plus préférentiellement entre 5% et 20% en poids, par rapport au poids total de la composition.

9. Composition selon l'une quelconque des revendications précédentes, dans laquelle ledit au moins un solvant organique est choisi parmi les alcools alkyliques comportant de 1 à 4 atomes de carbone, les éthers de glycol et leurs mélanges, de préférence le solvant organique utilisé est un glycol ou un mélange de glycol, et de manière tout particulièrement préférée, le solvant organique est le butylglycol.

10. Procédé pour empêcher, limiter ou retarder, la formation et/ou l'agglomération d'hydrates de gaz, comportant une étape d'ajout d'une composition telle que définie dans l'une quelconque des revendications 1 à 9 dans un fluide susceptible de former des hydrates.

11. Procédé selon la revendication 10, dans lequel la composition est ajoutée en une quantité entre 0,1% et 10% en poids, préférentiellement entre 0,2% et 7% en poids, de préférence encore entre 0,2% et 5% en poids et mieux encore entre 1% et 4% en poids, par rapport au poids total de la phase aqueuse du fluide susceptible de former des hydrates, et tout particulièrement entre 0,2% et 4%, typiquement entre 0,2% et 3%, en particulier entre 1% et 3% en poids.

12. Procédé selon la revendication 10 ou la revendication 11, dans lequel la composition est introduite dans le fluide susceptible de former des hydrates de manière continue, discontinue, régulièrement ou non, ou de manière temporaire, en une ou plusieurs fois.

13. Procédé selon la revendication 10 ou la revendication 11, dans lequel le fluide traité par la composition est une boue de forage ou un fluide de complétion ou un fluide extrait du sous-sol.

14. Utilisation d'une composition selon l'une quelconque des revendications 1 à 9, pour limiter, retarder ou empêcher, la formation et/ou l'agglomération d'hydrates, et de préférence dans un procédé d'extraction de pétrole et/ou de gaz et/ou de condensats.

## Patentansprüche

1. Zusammensetzung, umfassend:
a) mindestens ein Copolymer, in dem mindestens eine der Wiederholungseinheiten mindestens eine Amidfunktion umfasst,
b) mindestens einen Polyether mit einem gewichtsmittleren Molekulargewicht (M_{w}) von mehr als 60 g.mol⁻¹, bevorzugt mehr als 100 g.mol⁻¹, und
c) gegebenenfalls, aber bevorzugt, mindestens ein organisches Lösungsmittel,
wobei es sich in der Zusammensetzung bei dem Copolymer, in dem mindestens eine der Wiederholungseinheiten mindestens eine Amidfunktion umfasst, um ein Copolymer handelt, dessen Amidfunktionen von der Polymerkette abzweigen ("seitenständige" Amidfunktionen), und die Stickstoffatome der Amidfunktionen substituiert sein können und bevorzugt substituiert, weiter bevorzugt monosubstituiert und noch weiter bevorzugt disubstituiert sind.

2. Zusammensetzung nach Anspruch 1, wobei das Monomer bzw. die Monomere, die zur Bildung der Copolymere a) verwendet werden kann bzw. können, aus Monomeren der Formel (I): 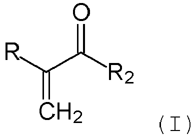 ausgewählt ist bzw. sind, wobei:
• R für -H oder -CH₃ steht und
• R₂ aus einem Wasserstoffatom und einem Alkyl-, Alkoxy-, Hydroxy-, N-Alkylaminoalkoxy-, N,N-Dialkylaminoalkoxy- und Hydroxyalkoxyrest und einem gesättigten oder teilweise oder vollständig ungesättigten cyclischen Rest mit 3 bis 8 Ringgliedern, bevorzugt 4 bis 7 Ringgliedern, und gegebenenfalls einem oder mehreren gleichen oder verschiedenen Heteroatomen, die aus Sauerstoff, Stickstoff und Schwefel ausgewählt sind, ausgewählt ist, wobei diese Gruppen gegebenenfalls durch eine oder mehrere Gruppen, die aus Alkyl, Halogen, Carbonyl, Hydroxy, Alkoxy, Amino, Nitro und Cyano ausgewählt sind, substituiert sind.

3. Zusammensetzung nach einem der vorhergehenden Ansprüche, wobei es sich bei dem Copolymer, in dem mindestens eine der Wiederholungseinheiten mindestens eine Amidfunktion umfasst, um ein durch Polymerisation von mindestens einem Monomer mit einer seitenständigen Amidfunktion erhaltenes Copolymer, bevorzugt ein durch Polymerisation von zwei oder mehr Monomeren mit einer seitenständigen Amidfunktion, die bevorzugt aus substituierten oder unsubstituierten (Meth)acrylamiden, Vinylmonomeren mit Lactamgruppen, insbesondere Vinylpyrrolidonen, und Vinylcaprolactamen ausgewählt sind, erhaltenes Copolymer, handelt.

4. Zusammensetzung nach einem der vorhergehenden Ansprüche, wobei es sich bei dem Polymer, in dem mindestens eine der Wiederholungseinheiten mindestens eine Amidfunktion umfasst, um ein durch Polymerisation von einem oder mehreren Monomeren, die aus Vinylpyrrolidon (VP), Vinylcaprolactam (VCap), Acrylamid, Methacrylamid, N-Alkylacrylamid, N-Alkylmethacrylamid, N,N-Dialkylacrylamid, N,N-Dialkylmethacrylamid, N,N-Dialkylaminoalkylacrylamid, N,N-Dialkylaminoalkylmethacrylamid sowie den quartären Alkylammoniumsalzen davon ausgewählt sind, erhaltenes Polymer handelt.

5. Zusammensetzung nach einem der vorhergehenden Ansprüche, wobei die Gesamtmenge des Copolymers bzw. der Copolymere a) zwischen 1 und 50 Gew.-%, bevorzugt zwischen 5 und 40 Gew.-% und weiter bevorzugt zwischen 10 und 30 Gew.-%, bezogen auf das Gesamtgewicht der Zusammensetzung, liegt.

6. Zusammensetzung nach einem der vorhergehenden Ansprüche, wobei der Polyether b) durch die nachstehende Formel (II) wiedergegeben wird: 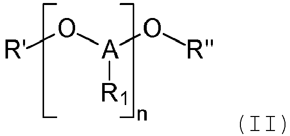 wobei
• R₁ aus dem Wasserstoffatom und einem Alkylrest mit 1 bis 6 Kohlenstoffatomen, bevorzugt 1 bis 4 Kohlenstoffatomen, bevorzugt dem Methylrest und dem Ethylrest, ausgewählt ist,
• R' und R", die gleich oder verschieden sind, unabhängig voneinander aus dem Wasserstoffatom und einer gesättigten oder teilweise oder vollständig ungesättigten, linearen, verzweigten oder cyclischen Kohlenwasserstoffkette mit 1 bis 10 Kohlenstoffatomen, bevorzugt 1 bis 6 Kohlenstoffatomen, weiter bevorzugt 1 bis 5 Kohlenstoffatomen, Grenzwerte eingeschlossen, die gegebenenfalls durch ein oder mehrere Sauerstoffatome und bevorzugt ein Sauerstoffatom unterbrochen ist, ausgewählt sind,
• A für eine gesättigte oder teilweise oder vollständig ungesättigte, lineare, verzweigte oder cyclische Kohlenwasserstoffkette mit 1 bis 10 Kohlenstoffatomen, bevorzugt 1 bis 6 Kohlenstoffatomen, weiter bevorzugt 1 bis 5 Kohlenstoffatomen, Grenzwerte eingeschlossen, die gegebenenfalls durch ein oder mehrere Sauerstoffatome und bevorzugt ein Sauerstoffatom unterbrochen ist, steht und
• n für eine ganze Zahl zwischen 1 und 200, bevorzugt zwischen 1 und 100, weiter bevorzugt zwischen 1 und 60, steht.

7. Zusammensetzung nach einem der vorhergehenden Ansprüche, wobei es sich bei dem Polyether um ein Homopolymer oder ein Blockcopolymer aus zwei oder mehr Blöcken oder ein statistisches Copolymer aus zwei oder mehr verschiedenen Ether-Monomeren handelt.

8. Zusammensetzung nach einem der vorhergehenden Ansprüche, wobei die Gesamtmenge des Polyethers bzw. der Polyether zwischen 0,5 und 90 Gew.-%, bevorzugt zwischen 0,5 und 50 Gew.-%, bevorzugt zwischen 1 und 30 Gew.-% und weiter bevorzugt zwischen 5 und 20 Gew.-%, bezogen auf das Gesamtgewicht der Zusammensetzung, liegt.

9. Zusammensetzung nach einem der vorhergehenden Ansprüche, wobei das mindestens eine organische Lösungsmittel aus Alkylalkoholen mit 1 bis 4 Kohlenstoffatomen, Glykolethern und Gemischen davon ausgewählt ist, es sich bevorzugt bei dem verwendeten organischen Lösungsmittel um ein Glykol oder ein Glykolgemisch handelt und es sich ganz besonders bevorzugt bei dem organischen Lösungsmittel um Butylglykol handelt.

10. Verfahren zur Verhinderung, Einschränkung oder Verzögerung der Bildung und/oder der Agglomeration von Gashydraten, umfassend einen Schritt der Zugabe einer Zusammensetzung gemäß einem der Ansprüche 1 bis 9 zu einem Fluid, das zur Bildung von Hydraten imstande ist.

11. Verfahren nach Anspruch 10, wobei die Zusammensetzung in einer Menge zwischen 0,1 und 10 Gew.-%, bevorzugt zwischen 0,2 und 7 Gew.-%, weiter bevorzugt zwischen 0,2 und 5 Gew.-% und noch besser zwischen 1 und 4 Gew.-%, bezogen auf das Gesamtgewicht der wässrigen Phase des Fluids, das zur Bildung von Hydraten imstande ist, und ganz besonders zwischen 0,2 und 4 Gew.-%, typischerweise zwischen 0,2 und 3 Gew.-%, insbesondere zwischen 1 und 3 Gew.-%, zugegeben wird.

12. Verfahren nach Anspruch 10 oder Anspruch 11, wobei die Zusammensetzung kontinuierlich, diskontinuierlich, regelmäßig, unregelmäßig oder zeitweilig ein- oder mehrmals in das Fluid, das zur Bildung von Hydraten imstande ist, eingetragen wird.

13. Verfahren nach Anspruch 10 oder Anspruch 11, wobei es sich bei dem mit der Zusammensetzung behandelten Fluid um eine Bohrspülung oder eine Komplettierungsflüssigkeit oder eine Flüssigkeit, die aus dem Untergrund extrahiert wird, handelt.

14. Verwendung einer Zusammensetzung nach einem der Ansprüche 1 bis 9 zur Beschränkung, Verzögerung oder Verhinderung der Bildung und/oder der Agglomeration von Hydraten und vorzugsweise bei einem Verfahren zur Förderung von Öl und/oder Gas und/oder Kondensaten.

## Claims

1. Composition comprising:
a) at least one copolymer, at least one of the repeat units of which comprises at least one amide functional group,
b) at least one polyether with a weight-average molecular weight (M_{w}) of greater than 60 g.mol⁻¹, preferably of greater than 100 g.mol⁻¹, and
c) optionally, but preferentially, at least one organic solvent,
composition wherein the copolymer, at least one of the repeat units of which comprises at least one amide functional group, is a copolymer, the amide functional groups of which are branched on the polymer chain ("pendant" amide functional groups), the nitrogen atoms of said amide functional groups can be substituted, and are preferably substituted, more preferably monosubstituted, more preferentially disubstituted.

2. Composition according to Claim 1, wherein the monomer or monomers which can be used to form the copolymers a) are chosen from the monomers of formula (I) : 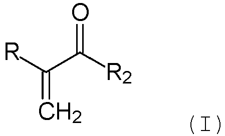 wherein:
• R represents -H or -CH₃, and
• R₂ is chosen from a hydrogen atom and an alkyl, alkoxy, hydroxy, N-alkylaminoalkoxy, N,N-dialkylaminoalkoxy, hydroxyalkoxy radical, saturated or partially or completely unsaturated cyclic radical comprising from 3 to 8 ring members, preferably 4 to 7 ring members, and optionally one or more identical or different heteroatoms which are chosen from oxygen, nitrogen and sulfur and which are optionally substituted by one or more groups chosen from alkyl, halogen, carbonyl, hydroxy, alkoxy, amino, nitro and cyano.

3. Composition according to either one of the preceding claims, wherein the copolymer, at least one of the repeat units of which comprises at least one amide functional group, is a copolymer obtained by polymerization of at least one monomer comprising a pendant amide functional group, preferably obtained by polymerization of two or more monomers comprising a pendant amide functional group, preferably chosen from substituted or unsubstituted (meth)acrylamides, vinyl monomers having lactam groups, in particular vinylpyrrolidones or vinylcaprolactams.

4. Composition according to any one of the preceding claims, wherein the polymer, at least one of the repeat units of which comprises at least one amide functional group, is a polymer obtained by polymerization of one or more monomers chosen from vinylpyrrolidone (VP), vinylcaprolactam (VCap), acrylamide, methacrylamide, N-alkylacrylamide, N-alkylmethacrylamide, N,N-dialkylacrylamide, N,N-dialkylmethacrylamide, N,N-dialkylaminoalkylacrylamide, N,N-dialkylaminoalkylmethacrylamide, and also the quaternary alkylammonium salts thereof.

5. Composition according to any one of the preceding claims, wherein the total amount of the copolymer or copolymers a) is of between 1% and 50% by weight, preferentially between 5% and 40% by weight and more preferentially between 10% and 30% by weight, relative to the total weight of the composition.

6. Composition according to any one of the preceding claims, wherein the polyether b) is represented by the formula (II) below: 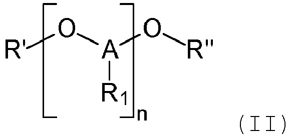 wherein,
• R₁ is chosen from the hydrogen atom and an alkyl radical comprising from 1 to 6 carbon atoms, preferably from 1 to 4 carbon atoms, preferably the methyl radical and the ethyl radical,
• R' and R", which are identical or different, are chosen, independently of each other, from the hydrogen atom and a saturated or partially or completely unsaturated, linear, branched or cyclic, hydrocarbon chain comprising from 1 to 10 carbon atoms, preferably from 1 to 6, more preferably from 1 to 5 carbon atoms, limits included, optionally interrupted by one or more, and preferably one, oxygen atom(s),
• A represents a saturated or partially or completely unsaturated, linear, branched or cyclic, hydrocarbon chain comprising from 1 to 10 carbon atoms, preferably from 1 to 6, more preferably from 1 to 5 carbon atoms, limits included, optionally interrupted by one or more, and preferably one, oxygen atom(s), and
• n represents an integer of between 1 and 200, preferably between 1 and 100, more preferably between 1 and 60.

7. Composition according to any one of the preceding claims, wherein the polyether is a homopolymer or a block copolymer, composed of two or more blocks, or a statistical copolymer composed of two or more different ether monomers.

8. Composition according to any one of the preceding claims, wherein the total amount of the polyether(s) is between 0.5% and 90% by weight, preferably between 0.5% and 50% by weight, preferably between 1% and 30% by weight and more preferentially between 5% and 20% by weight, relative to the total weight of the composition.

9. Composition according to any one of the preceding claims, wherein said at least one organic solvent is chosen from alkyl alcohols comprising from 1 to 4 carbon atoms, glycol ethers and mixtures thereof, preferably, the organic solvent used is a glycol or a glycol mixture and very particularly preferably the organic solvent is butyl glycol.

10. Process for preventing, limiting or delaying the formation and/or the agglomeration of gas hydrates, comprising a step of adding a composition as defined in any one of Claims 1 to 9 to a fluid liable to form hydrates.

11. Process according to Claim 10, wherein the composition is added in an amount of between 0.1% and 10% by weight, preferentially between 0.2% and 7% by weight, more preferably between 0.2% and 5% by weight and better still between 1% and 4% by weight, relative to the total weight of the aqueous phase of the fluid liable to form hydrates, and very particularly between 0.2% and 4%, typically between 0.2% and 3%, in particular between 1% and 3%, by weight.

12. Process according to Claim 10 or Claim 11, wherein the composition is introduced into the fluid liable to form hydrates continuously, discontinuously, regularly or irregularly, or temporarily, in one or more portions.

13. Process according to Claim 10 or Claim 11, wherein the fluid treated with the composition is a drilling mud or a completion fluid or a fluid extracted from the subsoil.

14. Use of a composition according to any one of Claims 1 to 9 for limiting, delaying or preventing the formation and/or the agglomeration of hydrates, and preferably in a process for extracting oil and/or gas and/or condensates.
